# EUROPEAN PATENT APPLICATION

(11) **EP 0 724 351 A2**
(43) Date of publication of application: **31.07.1996**
(21) Application number: 96300299.3
(22) Date of filing: 16.01.1996
(51) Int. Cl.: H04M 3/42, H04M 3/54, H04M 11/02

(54) **System and method for establishing communications with a mobile party**

(30) Priority: 27.01.1995 US 379425
(71) Applicant: AT&T Corp., New York, NY 10013-2412 (US)
(72) Inventor: Foladare, Mark J., Kendall Park, NJ 08824 (US); Friedes, Albert, East Brunswick, NJ 08816 (US); Silvermann, David P., Somerville, NJ 08876 (US); Weber, Roy P., Bridgewater, NJ 08807 (US)
(74) Representative: Buckley, Christopher Simon Thirsk

(57) **Abstract**

In a communication system capable of establishing communications between a calling party (12) and a mobile called party, who is equipped with a two way pager (10), the calling party initiates an incoming call by dialing the called party's Personal Telephone Number. The call is coupled to an adjunct (24) which holds the call while contacting the mobile party. The adjunct contacts the mobile party by cross referencing the dialed Personal Telephone Number to a pager code for the called party and then initiating the transmission of a paging signal (from 28). The paging signal alerts the called party to the incoming call at which time the called party responds by sending a return signal to the adjunct (24) via the two way pager (10). The return signal includes a forwarding number corresponding to a communication device (32) to which the adjunct (24) directs the incoming call.

## Description

### Technical Field

This invention relates to communications systems, and more particularly to establishing communications with a mobile party using paging technology.

### Background of the Invention

Establishing communications with a called party becomes a problem when that party is mobile. In general, persons wishing to contact a particular party initiate a call to a specific telephone associated with that party, such as the party's home telephone. A disadvantage of this method of communication is that parties are not always in close proximity to their home telephone, or for that matter, in close proximity to any telephone. This presents a problem to persons who need to contact the mobile party immediately, and regardless of that party's location.

Several technologies have developed in an effort to solve the problem of establishing communication with a mobile party. These include call forwarding, paging, and cellular systems. However, each of these technologies has drawbacks which prevent seamless and ubiquitous communication.

Call forwarding is a well-known technique whereby an individual who plans to be away from an associated telephone can redirect calls to an alternate telephone. For example, an office worker planning to go on vacation could redirect calls to an office mate's telephone. Such a system, although desirable, is inflexible. It requires that the forwarding party access a telephone to activate and deactivate the call forwarding, and to change the forwarding number. This inflexibility is particularly harsh on those parties that require frequent changes to their forwarding number, such as a travelling salesman who is on the road and would like to receive calls from potential buyers.

Moreover, present call forwarding schemes make inefficient use of network resources. Calls must be sent to the forwarding party's end office before they are redirected. Thus, for example, when a party forward's calls from the party's home telephone in California to a relative's telephone in New Jersey, calls from New York to the party's home telephone will be routed to California before being forwarded to New York. Such a process unnecessarily ties up network resources from New York to California to complete a call from New York to New Jersey.

In a paging system, a mobile individual carries a portable pager. Typically, the pager is assigned a telephone number and is capable of receiving a predetermined radio signal. When a caller dials the pager's number the predetermined radio signal is broadcast and the pager responds to the signal by activating an audible and/or visual alarm. The alarm serves to alert the mobile individual that an attempt to contact her has been made. Often, the caller's telephone number will be included in the radio signal so that the pager can record the caller's number and the called party can initiate a return call at some later time. One of the drawbacks of past paging systems is that they do not usually support two-way communication. Thus, in a typical paging scenario, the called party must relocate and initiate a return call to establish full two-way communication with the calling party. Such relocation may be inconvenient and untimely resulting in "telephone tag" - situations in which two individuals periodically try to contact one another and fail because the other person is unavailable.

Another drawback of past paging systems is the delay associated with the paging queue. In general, a paging service can only transmit one page at a time. However, a service usually receives many paging requests at once. Consequently, a queue builds up at the service's broadcast facility and a delay in paging throughput times results. This problem is compounded in paging services that offer national coverage to their subscribers. In such services a subscriber's pages are broadcast from several facilities, and therefore a delay in throughput times results at each facility.

Cellular systems offer an answer to the relocation problems present in call forwarding systems and paging systems but introduce a host of new problems. A typical cellular phone is a wireless two-way voice communication device that can be carried on an individual's person. Typically, each cellular phone user subscribes to service with a carrier in a particular geographic region served by that carrier. Calls to the subscriber, when the subscriber is in the home region, are easily completed since such calls are routed through a Mobile Telephone Switching Office (MTSO) serving the home region. However, when a subscriber is located in a different region, the subscriber is designated a "roamer", and call completion becomes more difficult because it is not known, a priori, through which MTSO to route the call.

The roamer problem may be overcome by having the roaming subscriber notify the "home MTSO" that she will be located in another region. This allows the necessary information to be transmitted from the "home MTSO" to the "host MTSO" so that the "host MTSO" can route the subscriber's calls. This "cellular call forwarding", however, introduces problems similar to those associated with traditional call forwarding. Moreover, all cellular communications - including those within the home region - suffer from a sensitivity to noise, precluding guaranteed high quality communications.

Given the problems associated with the prior call forwarding, paging, and cellular systems, there is a need to provide a system that will assure ubiquitous high quality communications with mobile parties.

### Summary of the Invention

The present invention employs a two-way paging technique to overcome the disadvantages present in the prior systems used to communicate with mobile individuals. A mobile person who wishes to take advantage of the present invention is equipped with a two-way pager and is assigned a Personal Telephone Number (PTN). The pager is responsive to the PTN so that the mobile individual may be paged whenever the PTN is dialed. Upon receipt of a page, the mobile individual uses the two-way pager to send a forwarding number to the telephone network.

A typical call to a mobile individual would proceed as follows. A calling party initiates a call from a home telephone to a subscriber (the mobile party) by dialing the subscriber's PTN. The call is coupled to a telephone network by a first network switch. A second network switch couples the call to an adjunct where the call is held pending further processing. Based on the PTN the adjunct retrieves the subscriber's record, including the subscriber's pager code, and passes the subscriber's record to a pager service along with a caller identification number.

Upon receipt of the information from the adjunct, the pager service broadcasts a pager activation signal and the caller identification number to the mobile party's pager. The pager activation signal triggers an audio and/or visual alarm within the pager that alerts the mobile party to the incoming call. At the same time, the caller identification number is shown on a pager display. After the pager activation signal and caller identification number have been received by the pager, the mobile party may choose to "answer the call".

To answer the call, the mobile party keys a forwarding number into a two-way pager. The pager then transmits the forwarding number to the pager service which, in turn, passes the forwarding number to the adjunct. The adjunct then places a second call to the telephone associated with the forwarding number and bridges, or merges, the original call and second call together. A special number may be transmitted in lieu of a forwarding number, in response to which the adjunct carries out special instructions.

In addition to transmitting the forwarding number, the two-way pager periodically transmits a location registration signal. The location registration signal is used by the paging service to determine the region in which the mobile party is located. Once the mobile party's region is known the paging service need only broadcast the party's pages within that region. If location registration is not available, the party's pages are broadcast in all possible regions.

The present invention offers several advantages over the prior systems. First, the mobile party can change the forwarding number using the two-way pager, eliminating the need to access a telephone each time the party wishes to change the forwarding number. Second, the mobile party may change the forwarding number on a call by call basis, determining the identification of a caller from the caller identification number and forwarding the caller accordingly. Third, unlike traditional paging systems, the mobile party does not need to relocate and initiate a return call. Thus, the calling party is not burdened with waiting for a return call and "telephone tag" situations are avoided. Fourth, the invention allows a mobile party to redirect calls to a cellular unit, thereby, providing a way for the mobile party to take advantage of cellular service when it is available while at the same time providing alternate communication when it is not available.

Moreover, the present invention allows call forwarding to be implemented at a point that is in close proximity to the originating telephone (typically near the first network switch. Thereby, allowing more efficient routing of forwarded calls and avoiding unnecessary use of network resources.

Another advantage of the invention is realized through the use of location registration. By reducing the number of broadcast facilities from which a mobile party's pages must be broadcast, the queue at any single facility is reduced and, therefore the delay in throughput times is reduced.

### Brief Description of the Drawings

FIG. 1 is a block-schematic diagram of a communication system incorporating the present invention.

FIG. 2 is a block-schematic diagram of a communication system incorporating a preferred embodiment of the present invention.

FIG. 3 shows a pager appropriate for use in accordance with the present invention.

FIG.s 4A and 4B make up a flow chart depicting the procedure followed by a subscriber to update the forwarding number or send a special call handling instruction.

FIG.s 5A and 5B make up a flow chart depicting the procedure followed to complete a call in accordance with a preferred embodiment of the present invention.

### Detailed Description

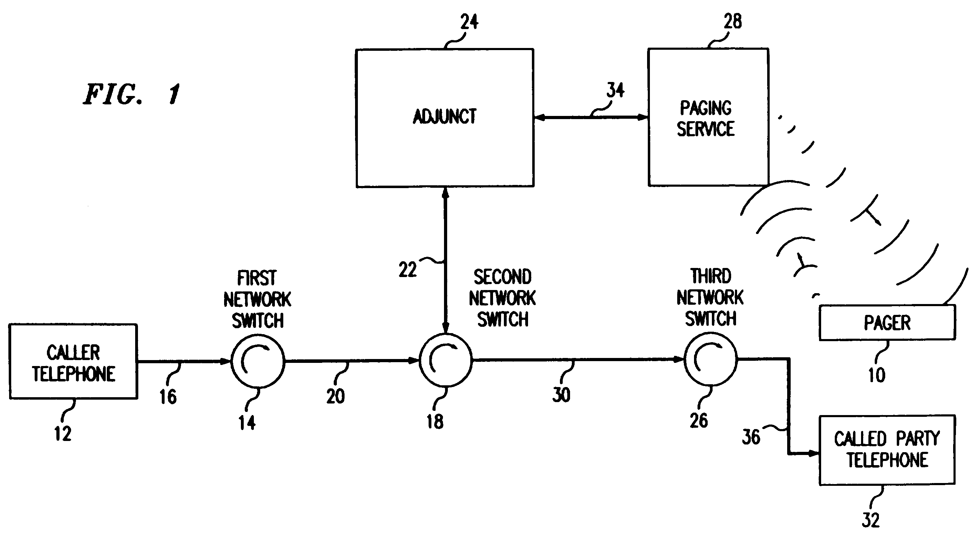

Referring to FIG. 1, there is shown a block diagram containing the major elements of a communication system incorporating the present invention. As shown in the diagram, a caller will be able to complete a call to a mobile party who is equipped with a two-way pager **10**. Although the diagram shows the call being initiated via a caller telephone **12**, it should be understood that the caller telephone, as well as all other telephones herein discussed, is used merely as an illustration and that the invention may be implemented through a variety of communication devices, including but not limited to telephones, computers, and facsimile machines.

In any event, in the embodiment of FIG. 1, the caller telephone is coupled to a first network switch **14** by a first communication coupling **16**; such as a telephone line, coaxial cable, fiber optic line, wireless link, or any other type of communication coupling. The first network switch is, in turn, coupled to a second network switch **18** by a second communication coupling **20**. The second communication coupling, and all such couplings hereinafter referred to, may take any of the forms mentioned in regard to the first communication coupling.

The second network switch is coupled to an adjunct **24**, via third communication couplings **22**, and to a third network switch **26**, via fourth communication coupling **30**. Thus, there is a path between the caller telephone and the adjunct, and a path between the caller telephone and the third network switch.

Adjunct **24** is an intelligent component external to the network and connected to the network in the same way that a switch or telephone is connected. Examples of adjuncts include the AT&T Voice Response Units (VRUs), such as a Conversant, and the Summa Four. Two possible ways of connecting the adjunct to a network are: via a Common Channel Interoffice Signaling (CCIS) link, and via an Integrated Services Digital Network (ISDN) communication link. In an alternative embodiment, the adjunct is internal to the network, in which case the functioning of the adjunct remains the same but a connecting link is not required.

When a call is initiated by dialing the mobile party's PTN it is coupled to adjunct **24** via couplings **16**, **14** and **22**, and switches **14** and **18**. The adjunct puts the call on "hold" and, based on the mobile party's identity (known through the PTN), retrieves the information necessary to page the mobile party . This information may be contained in a database internal to the adjunct or it may be read from an external data base (not shown). Adjunct **24** passes the necessary paging information to a paging service **28** via a fifth communication coupling **34**. The paging service then broadcasts a paging activation signal and a caller identification signal, both intended for reception by two-way pager **10**.

Pager **10** is equipped with: an alarm that is activated in response to the pager activation signal, a display that is responsive to the caller identification signal, and a keyboard for specifying a forwarding number or a special instruction. A mobile party who is alerted to a call may check the pager's display to identify the caller, and then, based on the identity of the caller, decide how to treat the call. One possible treatment is to forward the call to a called party telephone **32**. The called party telephone may be a nearby telephone station or some remote telephone station, such as a secretary's station. To forward the call to the called party telephone the mobile party keys the telephone number of the called party telephone into the pager using the pager's keyboard, and then transmits the number to the paging service **28**. The paging service passes the forwarding number to the adjunct where it is used to forward the call.

Other possible call treatments include those that may be used when the mobile party is busy. If the mobile party is busy with a call when a subsequent call to the party's PTN is placed, the party may forward the subsequent call to an alternate number, put the previous caller on hold and talk to the subsequent caller, or use the pager to transmit a conference call instruction to talk to both callers at the same time. Also, if the mobile party has forwarded the subsequent call but becomes free before the subsequent caller disconnects, the party may interrupt the forwarding of the subsequent call and redirect the call to the party.

In the embodiment of FIG. 1, adjunct **24** forwards the incoming call by holding the call at the adjunct while launching a second call from the adjunct to called party telephone **32**. This second call is routed through: communication coupling **22**, second network switch **18**, communication coupling **30**, third network switch **26**, and sixth communication coupling **36**. After the second call is complete the adjunct bridges the incoming call and the second call together so that the caller telephone is coupled to the called party telephone through the adjunct. As an alternative, the adjunct may merge the incoming call and the second call at the second network switch, in which case the adjunct drops from the call. Once the incoming call and the second call have been bridged, or merged, into a "forwarded call" the forwarded call may be "picked up" by the mobile party at telephone **32**.

A similar procedure may be used to implement special call handling instructions. For instance, in the case of a conference call between two callers and the mobile party, the adjunct may bridge, or merge the two incoming calls from the callers to an outgoing call to the mobile party.

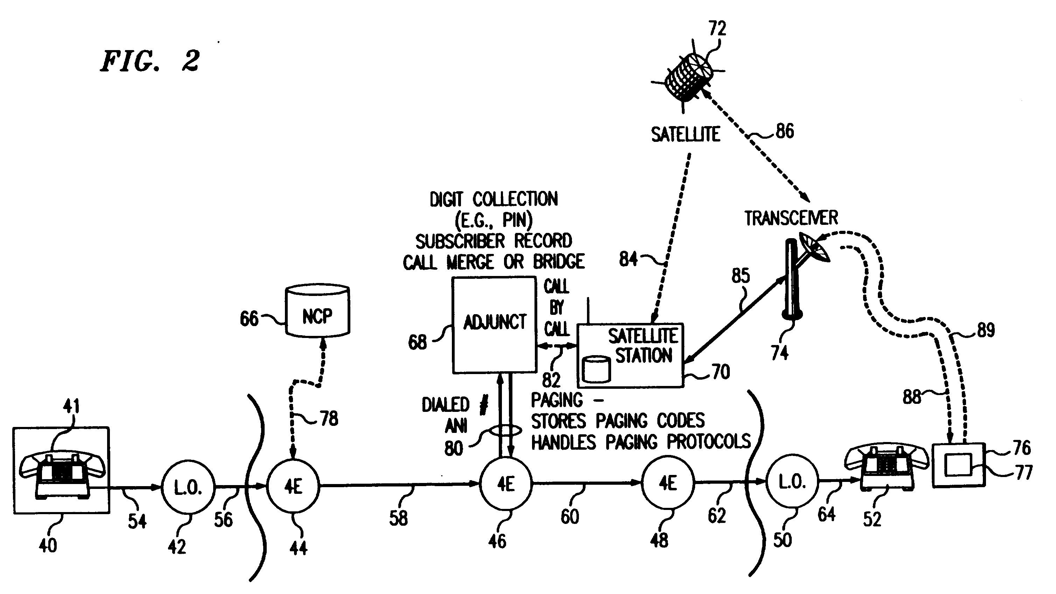

FIG. 2, shows a preferred embodiment of the invention as incorporated into an existing telephone network. As shown, a caller **40** seeks to establish communications with a mobile party, or "subscriber", **76** who is equipped with a two-way pager **77** suitable for use with the present invention. The subscriber is assigned a Personal Telephone Number (PTN). The caller initiates an incoming call from a telephone **41** by dialing the mobile party's PTN. This incoming call is coupled to a local office **42** in the caller's locality through a telephone line **54**. The local office **42** routes the call to an originating access switch **44** over a trunk line **56**. Switch **44** may take the form of a digital switch, or an electronic switching system, such as an AT&T 4ESS^{TM} switch ("4E" switch). For a more complete description of the 4E switch see, *The Bell System Technical Journal,* Vol. 56, No. 7, pp 1015-1320, pub. Sept. 1977.

Once the call has been routed to switch **44**, a Network Control Point (NCP) **66** receives the call's signaling information, including the dialed PTN, over a CCIS link **78**. The NCP uses the dialed number to retrieve routing information from the NCP's associated database. The NCP then routes the call over a trunk line **58** to a terminating access switch **46**, which, like the originating access switch, may be a digital switch or a 4E switch. Switch **46** is connectable to an adjunct **68** via an ISDN link **80**. The terminating access switch is capable of merging calls in response to a signal from the adjunct.

The ISDN link provides adjunct **68** with both the called number (subscriber's PTN) and the calling number (Automatic Number Identification number, or "ANI"). The adjunct retrieves the subscriber's record and current status information based on the PTN. From the subscriber's record the adjunct also determines whether or not the subscriber is provisioned to receive a Personal Identification Number (PIN). If the subscriber is so provisioned, adjunct **68** plays a standard prompting announcement to the caller after which the PIN is collected from the caller by the reception of up to 10 Dual Tone Multi Frequency (DTMF) digits (i.e. Touch Tone^{TM} signals from a Touch Tone^{TM} telephone) . In a system using PINs, provision must be made for the case where a caller can not enter a PIN because the caller is at a rotary dial station and for the case where a caller does not respond to the prompt. In these two cases, adjunct **68** may allow for a time-out or an abbreviated dialing sequence (e.g., #) to denote that no PIN is forthcoming. Regardless of whether or not a PIN is collected, adjunct **68** proceeds to determine if the subscriber **76** is busy with another call to the subscriber's PTN. It stores this determination, and then continues processing the call.

At this point, the adjunct plays an announcement that the system will "search" for subscriber **76**. On a subscriber pre-provisioned basis, adjunct **68** may play an announcement to the caller **40** as an inducement to remain on the line while awaiting call completion. Meanwhile, the adjunct retrieves the subscriber's pager code (known from the PTN) and transmits the code along with the caller's ANI (or PIN, if so provisioned) to a satellite station **70** via a communication link **82**.

The satellite station broadcasts the pager code and ANI (or PIN) to a paging transceiver **74** either through a satellite **72** or through a communication coupling **85**. When the satellite is used, the pager code and ANI (or PIN) are transmitted to the satellite by way of a wireless link **84**. The satellite, in turn, broadcasts the pager code and ANI (or PIN) to the transceiver by way of a wireless link **86**.

Communication coupling **85** is used when the two-way pager is equipped for location registration. Under the location registration scheme, the two-way pager periodically sends out a signal from which the satellite station determines the region within which the mobile party is located. Once the satellite station knows the mobile party's region, it need only send the paging information to the transceiver associated with that region. In this manner, the need for a national broadcast to all transceivers via satellite is obviated. Thus, when location registration is used satellite station **70** may transmit the pager code and ANI (or PIN) to transceiver **74** via communication coupling **85**. It will be understood by those of ordinary skill in the art that separate communication couplings from the satellite station to each transceiver are not required. Rather, signals to a transceiver that is not directly linked to the satellite station may be relayed to that transceiver over a transceiver network linked to the satellite station.

Regardless of whether satellite **72** or communication coupling **85** is used, the transceiver **74** broadcasts a paging signal that includes the pager code and ANI (or PIN) to the subscriber's pager. Broadcasting from transceiver **74** to pager **77** is represented by a wireless link **88**. Upon receipt of the paging signal from the transceiver, the subscriber is alerted to the call and responds by sending a forwarding signal. The subscriber may include any one of a number of possible responses in the forwarding signal.

The subscriber may elect to forward the call to a telephone station of the subscriber's choice, in which case, the subscriber uses the two-way pager to transmit the number of the desired telephone station to the transceiver. Alternatively, the subscriber may forward the call to voice mail, or some other treatment, in which case the subscriber uses the pager to transmit a number associated with the desired treatment.

The independence of the paging and communication paths makes it possible for the subscriber to forward calls to the subscriber's PTN even when the subscriber is busy with an earlier call. This will be true regardless of whether the earlier call was directed to the subscriber's PTN or directly to the telephone station at which the subscriber "picked up" the earlier call. Thus, in an illustrative scenario, the subscriber forwards a first caller to a nearby telephone station and picks up the call at that station. Then, while talking to the first caller, the subscriber forwards a second caller to a secretary, forwards a third caller to voice mail, and so on. The subsequent calls may be the forwarded without interruption of the first call and without the first caller becoming aware of them.

In addition to transmitting call forwarding instructions, the subscriber may transmit special call handling instructions, such as putting a caller on hold, switching between callers, creating a conference call, and redirecting a previously forwarded call. In a preferred embodiment, these special instructions are implemented by assigning them a number which the subscriber sends to the transceiver in the same way that a forwarding number is sent. Thus, in an example of switching between callers, a busy subscriber who receives a second call may send the number 999 to the transceiver indicating that the first caller should be put on hold and the second caller forwarded to the subscriber's present telephone station. In an example of redirecting a previously forwarded call, a busy subscriber who has forwarded a subsequent call to voice mail but later becomes free to take the subsequent call, may interrupt the forwarding of the subsequent call by sending the number 000 to the transceiver before the forwarded caller disconnects, the 000 indicating that the forwarded call should be released from voice mail and forwarded to the subscriber.

Regardless of the call handling treatment chosen by the subscriber, the two-way pager transmits the forwarding signal to transceiver **74**, as represented by wireless link **89**. The transceiver relays the two-way pager's transmissions to satellite station **72**, either through satellite **72** via wireless links **86** and **84**, or through communication link **85**. The satellite station then relays the subscriber's instructions to the adjunct via communication link **82**, and the adjunct responds accordingly.

To forward the call to a called party telephone **52**, the adjunct initiates a second call. The second call is routed to a third access switch **48** via a trunk line **60** (like switches **44** and **46**, switch **48** may be a digital switch or a 4E switch). The third access switch then routes the second call to a local end office **50** based on the forwarding number provided by the subscriber, the forwarding number being the number of called party telephone **52**, to which the original call will be forwarded. The local end office couples the second call to the called party telephone via a telephone line **64**.

Upon completion of the second call, the call from the caller to the PTN (on hold at the adjunct) and the second call are either bridged together within adjunct **68** (in which case the adjunct remains with the call), or merged at switch **46** (in which case the adjunct drops from the call). If the calls are bridged, the adjunct may implement the features of putting a caller on hold, switching between callers, creating a conference call, and interrupting a previously forwarded call. Whereas, if the calls are merged, switch **46** may implement these features under direction from the adjunct.

During the interval of time between the dialing of the subscriber's PTN to initiate a call and the final disposition of that call (the call set up time), an announcement may be played to the caller as an inducement to stay on the line while the call is processed.

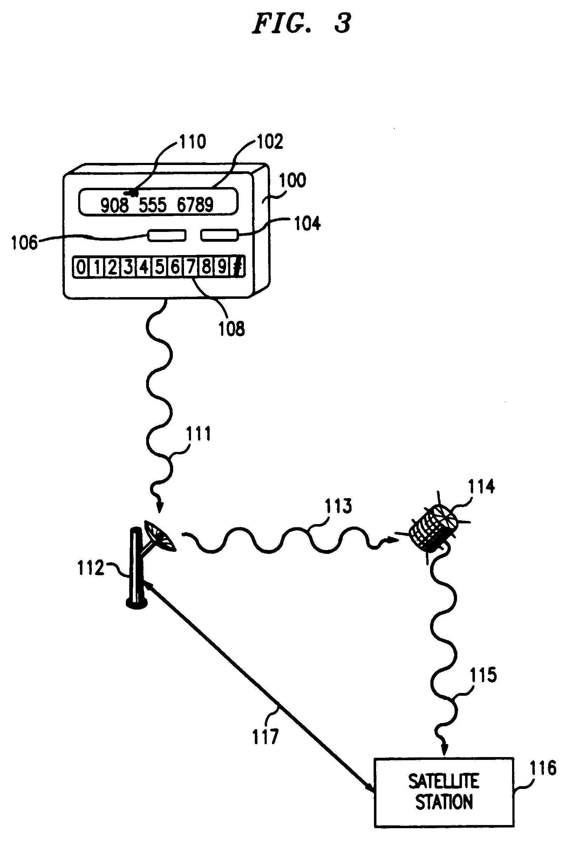

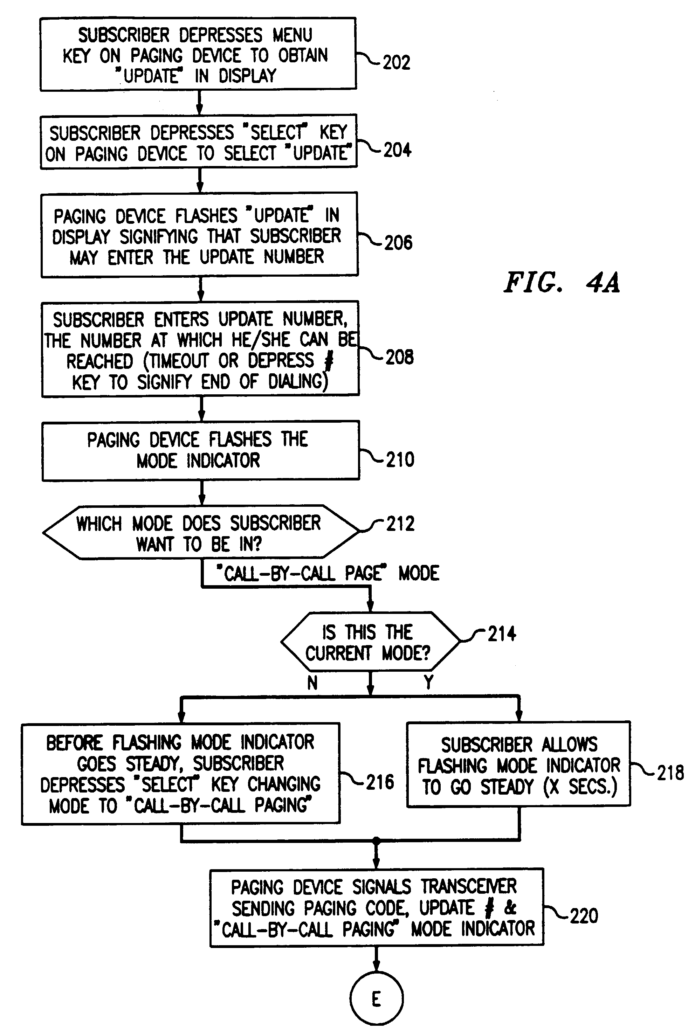

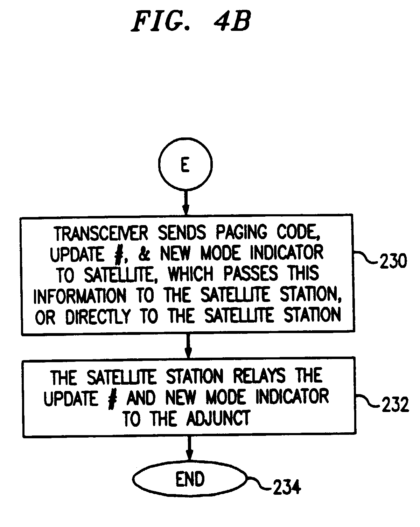

FIG. 3 shows an illustrative embodiment of a two-way pager **100**, a transceiver **112**, a satellite **114**, a satellite ground station **116**, wireless links **111**, **113** and **115**, and a communication link **117**, the embodiment being suitable for use in accordance with the present invention. Pager **100** includes: a display **102**, such as a liquid crystal display or light emitting diode display; a select key **104**; a menu key **106**; a keypad **108**; and a mode indicator **110**, that may be included within the display **102**. FIG. 3 will be referenced in the following discussion of the flowchart in FIGs 4A and 4B.

FIGS. 4A and 4B show the steps taken in updating the subscriber's forwarding number. The first step the subscriber takes to update the forwarding number is to depress menu key **104** on pager **100** (step **202**). The word "update" will appear in display **102**. The subscriber then depresses select key **106** to select "update" (step **204**). The word "update" will flash in the display to indicate that the subscriber may enter the update number (step **206**). The subscriber may now input the forwarding number via keypad **108** followed by the # key to indicate the end of input (step **208**). To enter a special call handling instruction, such as a conference call instruction, a number associated with that instruction would be input rather than a forwarding number (step **208**). A subscriber who does not want to change the forwarding number and does not want to input a special instruction number may simply depress the # key without keying in a number.

Moreover, in a preferred embodiment, the pager is equipped with the ability to store forwarding numbers so that abbreviated key sequences may be used to change the forwarding number. For example, the subscriber's office telephone number may be stored in the pager's memory at a first location and the subscriber's home telephone number may be stored in the pager's memory at a second location. Thereafter, when the subscriber wants to change the forwarding number to the office number, the subscriber simply keys in a 1 followed by the # sign. Similarly, when the subscriber wants to change the forwarding number to the home number, the subscriber simply keys in a 2 followed by the # sign.

In any case, after receiving a # input, the pager's mode indicator will flash (step **210**). At this point, the subscriber must select the desired mode (step **212**) (In accordance with the present invention the subscriber would select call by call mode). The pager determines if the desired mode is the current mode (step **214**). If the subscriber desires the call by call mode and the current mode is not the call by call mode, then before the flashing mode indicator goes steady, the subscriber depresses select key **106** to change to call by call mode (step **216**). If the current mode is the call by call mode, the subscriber allows a period of time to pass, after which the flashing mode indicator will go steady; or, in the alternative, the subscriber may depress the # key to curtail timing and retain the current mode (step **218**). After the mode has been selected, the pager signals the transceiver **112**, sending the pager code, updated forwarding number, and a call by call mode indicator (step **220**).

Following reception of the pager's transmission, represented by wireless link **111**, transceiver **112** relays the pager code, updated forwarding number, and mode indicator to satellite station **116** either through wireless link **113**, satellite **114**, and wireless link **115**; or, when location registration is used, through communication link **117** (step **230**) . Finally, the satellite station relays the forwarding number to the adjunct where it is used to forward an incoming call (step **232**). At this point the update is complete (step **234**).

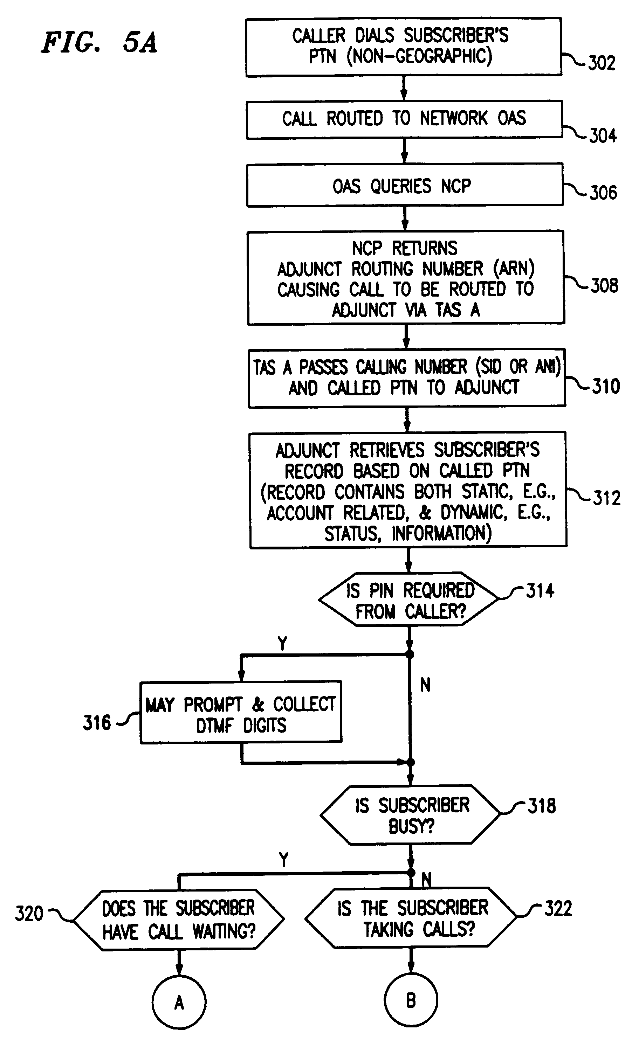

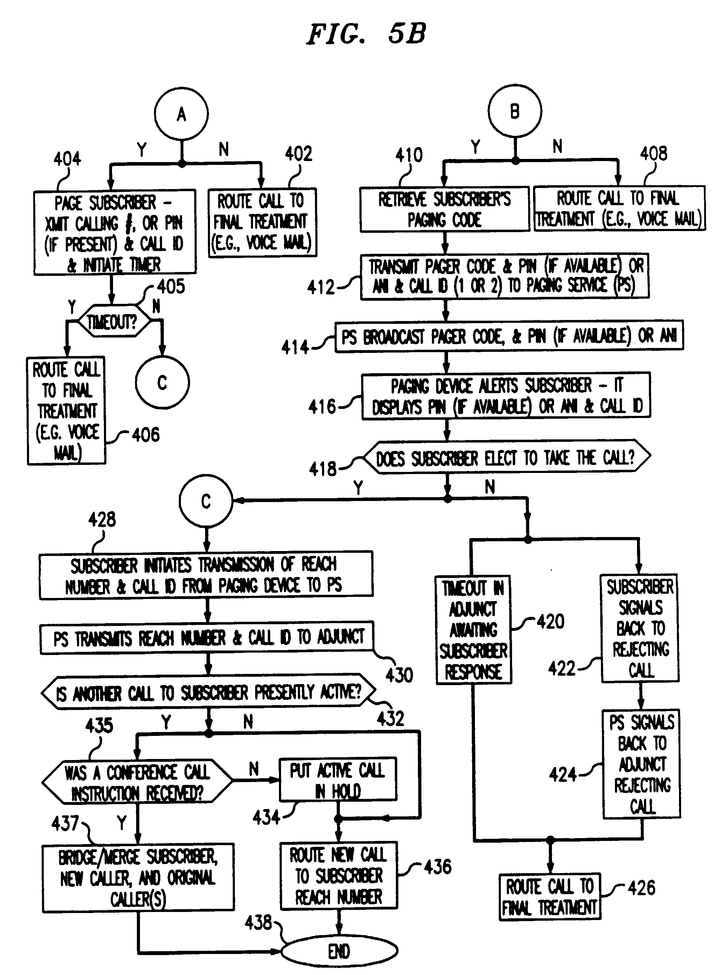

FIGS. 5A and 5B show, in flowchart form, the steps taken in completing a call in accordance with a preferred embodiment of the present invention. In the following discussion of FIGs 5A and 5B references will be made to FIG 2.

The call by call procedure is invoked when caller **40** dials the subscriber's PTN (step **302**). The call is routed to originating access switch **44**, or "OAS", (step **304**) and the OAS queries NCP **66** (step **306**). The NCP returns an Adjunct Routing Number (ARN) to the OAS, causing the call to be routed to adjunct **68** via terminating access switch **46**, or "TAS A", (step **308**). The terminating access switch passes the calling number, determined through ANI, and the called PTN to the adjunct (step **310**). The adjunct then retrieves the subscriber's record based on the dialed PTN (step **312**) and determines if the subscriber has provisioned for a PIN to be collected from the caller (step **314**).

If a PIN has been provisioned for, adjunct **68** plays a prompt and collects DTMF digits (step **316**). If a PIN has not been provisioned for, the procedure skips to step **318** which is to determine if the subscriber is busy (i.e., if a call to the subscriber via the adjunct is in progress).

If the subscriber is busy, the next step is to check if the subscriber has Call Waiting (step **320**). If the subscriber does not have Call Waiting, the call is routed to final treatment, such as Voice Mail (step **402**). If the subscriber does have Call Waiting, the subscriber is paged, the paging signal including the pager code, calling number (or PIN), and a call identifier (step **404**). If the subscriber does not respond to the page within some predetermined time after the page is sent (step **405**), the caller is "timed out" and the call is routed to final treatment (step **406**). The subscriber may respond within the allotted time by initiating transmission of a forwarding (or "reach") number, or a conference call instruction (step **428**), and processing of the call continues in accordance with the steps following step **428**.

If it is determined in step **318** that the subscriber is not busy, adjunct **68** determines whether or not the subscriber is taking calls (step **322**). If calls are not being accepted, the call is forwarded to final treatment (step **408**). Otherwise, the adjunct retrieves the subscriber's pager code (step **410**) and transmits the pager code, calling number (or PIN), and call identifier to the paging service (step **412**). The paging service then broadcasts the information (step **414**) to pager **77** which alerts the subscriber and displays the calling number (or PIN) and the call identifier (step **416**). At this point, the subscriber may accept or reject the call (step **418**).

There are two ways by which the subscriber may reject the call. The subscriber may do nothing, in which case the caller will be timed out (step **420**) and the adjunct will route the call to final treatment (step **426**). Or, the subscriber may send a rejection signal (a special instruction) to the paging service (step **422**), in which case the paging service will relay the rejection signal to the adjunct (step **424**) and the adjunct will cause the call to be routed to final treatment (step **426**). If the subscriber elects to take the call, the subscriber initiates transmission of a reach number by way of two-way pager **77** (step **428**).

Thus, the subscriber may transmit either a reach number or a conference call instruction at step **428** of the process. Upon receipt of a number, the paging service transmits the number and the call identification to the adjunct (step **430**). Next, the adjunct checks whether or not there is another presently active call to the subscriber (step **432**).

In the event there is a presently active call, the adjunct checks to see if a conference call instruction was received (step **435**) . If a conference call instruction was not received, the adjunct puts the active call on hold (step **434**) and bridges/merges the new call to the subscriber (step **436**) . If a conference call instruction was received, the adjunct bridges/merges the new call to both the subscriber and the original caller (step **437**).

In the event there is not another presently active call, step **434** is skipped and the adjunct bridges/merges (step **436**) the new call to the subscriber immediately following step **432**. The procedure is complete upon bridging/merging of the call (step **438**).

## Claims

1. A communication system comprising:
a) a caller communication device for initiating a call to a called party using a personal telephone number that is uniquely associated with said called party;
b) a two-way pager associated with said called party and having a unique pager code;
c) an adjunct for receiving calls from said caller communication device, retrieving said pager code in response to said call, initiating the transmission of a paging signal to said called party, and receiving a return signal from said pager, said return signal including a forwarding signal sufficient to forward said call;
d) a called party communication device to which said call is to be forwarded;
e) means for coupling said caller communication device to said adjunct; and
f) means for coupling said caller communication device to said called party communication device.

2. A communication system according to claim 1, wherein said adjunct comprises:
a database for storing said pager code; and
means for cross referencing said personal telephone number to said pager code and retrieving said pager code from said data base.

3. A communication system according to claim 1, further comprising:
a paging service responsive to said adjunct for broadcasting said paging signal to said two-way pager and for receiving said return signal from said two way pager; and
means for coupling said paging service to said adjunct.

4. A communication system according to claim 3, wherein said paging service comprises:
a satellite station for transmitting said paging signal in response to the initiation of said paging signal by said adjunct;
a satellite for receiving said paging signal from said satellite station and for broadcasting said paging signal; and
a transceiver for receiving said paging signal from said satellite, transmitting said paging signal to said pager, receiving said return signal from said pager, and transmitting said return signal to said satellite.

5. A communication system according to claim 3, wherein said paging service comprises:
a satellite station for transmitting said paging signal in response to the initiation of said paging signal by said adjunct;
a transceiver for receiving said paging signal from said satellite station, transmitting said paging signal to said pager, receiving said return signal from said pager, and transmitting said return signal to said satellite station; and
a communication coupling for use in communicating signals between said satellite station and said transceiver.

6. A communication system according to claim 1, wherein said two-way pager comprises:
means for receiving said paging signal;
means for broadcasting said return signal;
a display for displaying information about said paging signal and said return signal; and
a keypad for changing the characteristics of said return signal.

7. A communication system according to claim 1, wherein said means for coupling said caller communication device to said adjunct comprises;
an originating access switch;
a terminating access switch;
a first communication link coupling said originating access switch with said terminating access switch; and
a second communication link coupling said terminating access switch with said adjunct.

8. A communication system according to claim 7, wherein said means for coupling said caller communication device to said called party communication device comprises:
a first phone line coupling said caller communication device with a first local office;
a second phone line coupling said first local office to said originating access switch;
said first communication link;
said terminating access switch;
a third access switch;
a third communication link coupling said terminating access switch with said third access switch;
a second local office;
a third phone line coupling said third access switch to said second local office; and
a fourth phone line coupling said second local office to said called party communication device.

9. A communication system according to claim 7, further comprising:
a network control point coupled to said originating access switch for routing said call to said terminating access switch via said first communication link; and
means for coupling said network control point to said originating access switch.

10. A method of establishing communication, comprising the steps of:
a) providing a two-way pager to a subscriber
b) assigning a personal telephone number to said subscriber;
c) initiating a first call from a caller communication device by using said personal telephone number;
d) coupling said first call to an adjunct;
e) using said adjunct to retrieve said subscriber's pager code;
f) paging said called party;
g) transmitting a forwarding signal from said two-way pager to said adjunct; and
h) forwarding said first call to a called party communication device in response to said forwarding signal.

11. A method of establishing communication according to claim 10, wherein the step of coupling said first call to an adjunct comprises the steps of:
providing an originating access switch and a terminating access switch;
coupling said caller communication device to said originating access switch;
coupling said originating access switch to said terminating access switch; and
coupling said terminating access switch to an adjunct.

12. A method of establishing communication according to claim 11, wherein the step of coupling said originating access switch to said terminating access switch comprises the steps of:
providing a network control point and means for coupling said network control point to said originating access switch; and
coupling said originating access switch to said terminating access switch in response to a signal from said network control point.

13. A method of establishing communication according to claim 11, wherein the step of paging said called party comprises the steps of:
transmitting a paging signal from said adjunct to a satellite station;
transmitting a paging signal from said satellite station to a satellite;
broadcasting said paging signal from said satellite for reception by a transceiver; and
transmitting said paging signal from said transceiver to said two-way pager.

14. A method of establishing communication according to claim 11, wherein the step of paging said called party comprises the steps of:
transmitting a paging signal from said adjunct to a satellite station;
transmitting a paging signal from said satellite station to a transceiver; and
transmitting said paging signal from said transceiver to said two-way pager.

15. A method of establishing communication according to claim 13, wherein the step of transmitting a forwarding signal comprises the steps;
transmitting said forwarding signal from said two-way pager to said transceiver;
transmitting said forwarding signal from said transceiver to said satellite;
broadcasting said forwarding signal from said satellite for reception by said satellite station; and
transmitting said forwarding signal from said satellite station to said adjunct.

16. A method of establishing communication according to claim 14, wherein the step of transmitting a forwarding signal comprises the steps;
transmitting said forwarding signal from said two-way pager to said transceiver;
transmitting said forwarding signal from said transceiver to said satellite station; and
transmitting said forwarding signal from said satellite station to said adjunct.

17. A method of establishing communication according to claim 11, wherein the step of forwarding said first call comprises the steps of:
providing a third access switch;
initiating a second call at said adjunct;
coupling said second call from said adjunct to said terminating access switch;
coupling said second call from said terminating access switch to said third access switch;
coupling said second call from said third access switch to said called party communication device; and
bridging said first call and said second call together in said adjunct.

18. A method of establishing communication according to claim 11, wherein the step of forwarding said first call comprises the steps of:
providing a third access switch;
initiating a second call at said adjunct;
coupling said second call from said adjunct to said terminating access switch;
coupling said second call from said terminating access switch to said third access switch;
coupling said second call from said third access switch to said called party communication device; and
merging said first call and said second call together at said terminating access switch.

19. A method of establishing communication according to claim 18, wherein the step of coupling said caller communication device to said originating access switch comprises the steps of:
providing a first phone line, a first local office, and a second phone line;
coupling said caller communication device to said first local office via said first phone line; and
coupling said first local office to said originating access switch via said second phone line; and
wherein the step of coupling said second call from said third access switch to said called party communication device comprises the steps of:
providing a third phone line, a second local office, and a fourth phone line;
coupling said third access switch to said second local office via said third phone line; and
coupling said second local office to said called party communication device via said fourth phone line.

20. A communication system comprising:
a) a two-way pager associated with a called party;
b) a caller communication device for initiating a call to said called party, said caller communication device being coupled to a first local office;
c) an originating access switch coupled to said first local office;
d) a terminating access switch coupled to said originating access switch;
e) an adjunct coupled to said terminating access switch for holding said call while said called party is paged, and for forwarding said call in response to a forwarding signal from said two-way pager;
f) a paging service coupled to said adjunct for paging said called party, receiving said forwarding signal from said called party's two-way pager, and relaying said forwarding signal to said adjunct;
g) a third access switch coupled to said adjunct and to a second local office; and
h) a called party communication device coupled to said second local office for receiving said forwarded call.
